# EUROPÄISCHE PATENTANMELDUNG

(11) **EP 2 228 157 A1**
(43) Veröffentlichungstag der Anmeldung: **15.09.2010**
(21) Anmeldenummer: 10002202.9
(22) Anmeldetag: 04.03.2010
(51) Int. Cl.: B23B 45/02, B25F 5/00, B25B 23/14

(54) **Elektromotorisch angetriebenes Schraub- oder Bohrwerkzeug**

(30) Priorität: 13.03.2009 DE 102009013108
(71) Anmelder: Metabowerke GmbH, 72622 Nürtingen (DE)
(72) Erfinder: Maier, Markus, 73061 Ebersbach (DE); Däschler, Arttu, 73630 Remshalden (DE)
(74) Vertreter: Dreiss

(57) **Zusammenfassung**

Diese Erfindung betrifft ein elektromotorisch angetriebenes Schraub- oder Bohrwerkzeuggerät mit einem Planetengetriebe (4) mit einem Gehäuse (62) umfassend ein Hohlrad (6) sowie im Hohlrad (6) geführt und mit diesem kämmende Planetenräder (8), sowie ein die Planetenräder (8) antreibendes Sonnenrad, wobei eine Werkzeugspindel (13) zum Antrieb eines Werkzeugs über die Achsen (10) der Planetenräder (8) antreibbar ist, und einer Drehmomenteinstelleinrichtung (34) umfassend radial nach innen federvorgespannte Rastkörper (16), mit denen das Hohlrad (6) gehäusefest festlegbar ist, wobei die Rastkörper (16) bei Überschreiten eines einstellbaren Grenzdrehmoments nach radial außen verdrängbar sind, so dass das Hohlrad (6) gegenüber dem Gehäuse (62) drehbar ist und die Werkzeugspindel (13) nicht mehr angetrieben wird, wobei in Umfangsrichtung verlaufende Blattfedern (22) vorgesehen sind, deren Hebelarmlänge, zur Erzeugung der Einrückkräfte, die auf einen Rastkörper (16) wirken einstellbar ist, wobei das Hohlrad (6) in axialer Richtung direkt oder indirekt mit mindestens einer Feder (40) oder einem federnden Element zusammenwirkt, die oder das das Hohlrad (6) axial federnd vorspannt.

## Beschreibung

Die Erfindung betrifft ein elektromotorisch angetriebenes Schraub- oder Bohrwerkzeug mit Planetengetriebe gemäß dem Oberbegriff des Anspruchs 1.

Ein solches Werkzeuggerät ist aus der EP 1 787 757 B1 bekannt. Hierbei ist vorgesehen, dass die in Umfangsrichtung verlaufenden Blattfedern, deren Hebelarmlänge zur Erzeugung verschiedener Biegekräfte, die auf einen Rastkörper einwirken, einstellbar ist, eine trapezförmige Abwicklung aufweisen. Dies soll den Vorteil bieten, dass bei Blattfedern mit trapezförmiger Abwicklung zur Einstellung einer hohen Drehmomentbegrenzung der Gelenkpunkt der Blattfeder im Bereich großer Breite der trapezförmigen Federform zu liegen kommt.

Die Rastkörper werden in Vertiefungen des Hohlrades geführt und bei Überschreiten eines voreingestellten Drehmoments an der Antriebswelle erfolgt ein Verdrängen der Rastkörper nach außen und somit ein Verdrehen des Hohlrades gegenüber dem Gehäuse. Nachteilig bei einer solchen Ausgestaltung kann sein, dass beim Beschleunigen oder Abbremsen es ebenfalls zu einem Durchrutschen des Hohlrades gegenüber dem Gehäuse kommen kann.

Der vorliegenden Erfindung liegt nun die Aufgabe zugrunde, ein Schraub- oder Bohrwerkzeuggerät der eingangs genannten Art weiter zu verbessern, so dass insbesondere ein Durchrasten des Hohlrads gegenüber dem Gehäuse beim Beschleunigen verhindert werden kann.

Diese Aufgabe wird bei einem Schraub- oder Bohrwerkzeuggerät der genannten Art erfindungsgemäß dadurch gelöst, dass das Hohlrad in axialer Richtung direkt oder indirekt mit mindestens einer Feder oder einem federnden Element zusammenwirkt, die oder das das Hohlrad axial federnd vorspannt. Die Begriffe Feder und federndes Element werden in der Folge gleichbedeutend verwendet.

Hierbei sind jedem Rastkörper eine in Umfangsrichtung erstreckte Blattfeder zugeordnet, wobei vorzugsweise drei äquidistant über den Umfang verteilte Rastkörper vorgesehen sind. Alternativ können jedoch auch zwei oder mehr als drei Rastkörper, die insbesondere gleichmäßig über den Umfang verteilt sind, vorgesehen sein. Hierdurch lässt sich das maximale Drehmoment anteilig auf mehrere Rastkörper verteilen, wobei dadurch, dass jedem Rastkörper eine Blattfeder zugeordnet ist, durch Einstellen der Hebelarmlänge eine betreffende zu überwindende Auslenkkraft für den jeweiligen Rastkörper und damit ein maximales Drehmoment für eine Werkzeugantriebswelle (Werkzeugspindel) eingestellt werden kann. Gleichzeitig wird hierzu lediglich in axialer Richtung ein sehr geringer Bauraum benötigt.

Durch die Vorsehung einer Feder oder eines federnden Elements, die oder das das Hohlrad axial federnd vorspannt, kann erreicht werden, dass es nicht zu einem Überrasten des Hohlrades über die Rastkörper beim Hochbeschleunigen des Elektrohandwerkzeuggerätes kommt, sondern das Hohlrad wird beim Beschleunigen des Elektrohandwerkzeuggerätes durch die axiale Vorspannung abgebremst. Durch diese Hemmung des Hohlrades wird verhindert, dass das Hohlrad sich beim Beschleunigen des Schraub- oder Bohrwerkzeuggerätes zunächst im Gehäuse mit den Planeten mitdreht und dann aufgrund des bestehenden Schwungs es zu einem Überrasten der entsprechenden Elemente des Hohlrads, die mit den Rastkörpern zusammenwirken, über die Rastkörper kommt. Ein derartiges Überrasten beim Beschleunigen wird als dynamisches Überrasten oder dynamisches Durchrasten bezeichnet und tritt insbesondere dann auf, wenn die entsprechenden, mit den Rastkörpern zusammenwirkenden Elemente des Hohlrades beim Anlaufen der Maschine nicht unmittelbar miteinander in Kontakt stehen, sondern in Umfangsrichtung voneinander beabstandet sind, so dass es zu einem Beschleunigen des Hohlrades gegenüber den Rastkörpern kommen kann, bis die beiden, miteinander zusammenwirkenden Elemente, nämlich die Elemente des Hohlrades, die mit den Rastkörpern zusammenwirken und die Rastkörper in Eingriff kommen. Während des Überrastens erfolgt kein Antrieb an der Werkzeugspindel. Ein ähnlicher Effekt kann auch beim Abbremsen auftreten und durch die Erfindung vermieden werden.

Dieses dynamische Überrasten ist jedoch nicht erwünscht, da eigentlich kein Betriebsfall vorliegt, in dem die Rastenkupplung aufgrund eines Überschreitens eines Grenzdrehmoments auslösen soll.

Durch diese axiale federnde Vorspannung kann zusätzlich zu der bereits bekannten Rastenkupplung eine Rutschkupplung realisiert werden, die das dynamische Durchrasten beim Beschleunigen verhindert.

Dabei kann besonders vorteilhaft vorgesehen sein, dass es sich bei der mindestens einen Feder oder dem federnden Element um mindestens eine Tellerfeder handelt. Die Tellerfeder kann dabei als geschlitzte oder geschlossene Tellerfeder oder als Wellfeder ausgebildet sein. Insbesondere können auch mehrere radial verlaufende Schlitze in der Tellerfeder angeordnet sein, wobei sich über die Härte der Feder die gewünschte Federwirkung einstellen lässt. Alternativ kann auch vorgesehen sein, dass mehrere Federn, insbesondere Tellerfedern oder Wellfedern, in axialer Richtung nacheinander angeordnet sind und zusammenwirken. Durch die Vorsehung mehrerer aneinander anliegender Tellerfedern zu einem Federblock, können die Federkräfte weiter verstärkt werden und so je nach gewünschter aufzubringender Kraft die Federkräfte, die ein Durchrasten beim Anlaufen verhindern sollen, weiter eingestellt werden. Insbesondere kann so das Grenzmoment ab dem ein Durchrutschen der Rutschkupplung nach wie vor möglich ist, beliebig variiert werden und von den Kräften, die durch den Motor sowie das Getriebe des Elektrohandwerkzeuggerätes aufgebracht werden können, abhängig eingestellt und mit der Rastenkupplung abgestimmt werden.

Das Auslösemoment der Rutschkupplung ist jedoch im Gegensatz zum Auslösemoment der Rastenkupplung nicht durch den Benutzer des Werkzeuggerätes verstellbar.

Zusätzlich zur Feder oder zum federnden Element kann eine Anlaufscheibe vorgesehen sein, die mit der Feder oder dem federnden Element auf ihrer dem Hohlrad zugewandten Seite zusammenwirkt. Hierdurch kann erreicht werden, dass beim Durchrutschen der Rutschkupplung die Feder oder das federnde Element einem geringeren Verschleiß unterworfen ist.

Zur Bauteileinsparung kann auch vorgesehen sein, dass die Feder oder das federnde Element, die oder das dem Hohlrad am nächsten angeordnet ist, mit einer integrierten Anlaufscheibe versehen ist. Das heißt, die Funktion der Anlaufscheibe kann zugleich auch in die Feder, die insbesondere als Tellerfeder ausgebildet ist, oder das federnde Element integriert sein.

Insbesondere kann weiter vorgesehen sein, dass die Feder bzw. das federnde Element und/oder die Anlaufscheibe eine radiale Verdrehsicherung aufweisen und so gegen Verdrehen im Gehäuse festgelegt sind. Hierzu können z.B. Laschen vorgesehen sein, die in entsprechende Aufnahmen an einem gehäusefesten Bauteil eingreifen.

Insgesamt kann durch das axiale Vorspannen des Hohlrades neben dem genannten Effekt der Rutschkupplung das Axialspiel des gesamten Planetengetriebes reduziert werden und dadurch die axiale Eingriffsposition der Getriebeteile sichergestellt werden. Darüber hinaus kann das Laufverhalten und damit auch die Geräuschentwicklung positiv beeinflusst und optimiert werden.

Es erweist sich des weiteren als vorteilhaft, wenn die Blattfedern zur radialen Vorspannung der Rastkörper radial außerhalb eines gehäusefesten Rings, der insbesondere als Rastring bezeichnet ist, angeordnet sind und zur Einstellung der Hebelarmlänge direkt gegen diesen andrückbar sind. Dieser gehäusefeste Rastring kann in vorteilhafter Weise in Umfangsrichtung durchgehend ausgebildet sein, jedoch Durchtrittsöffnungen für die Rastkörper aufweisen. In diesem Fall ist das Hohlrad bei Durchtrieb auf die Werkzeugspindel mittels der Rastkörper mit dem gehäusefesten Rastring gekoppelt, so dass die Planetenräder in der Innenverzahnung des Hohlrads kämmend abrollen und die Werkzeugspindel antreiben können. Dabei kann der Antrieb der Werkzeugspindel insbesondere über den Planetenträger, an dem die Planeten mit ihren Achsen gelagert sind, erfolgen.

Zur Drehmomenteinstellung erweist es sich als vorteilhaft, wenn radial außerhalb der Blattfedern ein Stellorgan vorgesehen ist, bei dem es in vorteilhafter Weise um ein Stellring handeln kann, der einen Hals des Schraub- oder Bohrwerkzeuggeräts umgibt und gegenüber dem Gehäuse drehbar ist. Das Stellorgan oder der Stellring kann vorzugsweise direkt mit den Blattfedern gekoppelt sein, insbesondere drückt er nach radial innen gegen die Blattfedern und gibt so deren Hebelarmlänge vor. Die Drehmomentvorwahl kann dann nahezu kraftlos erfolgen, indem die Hebelarmlänge variierbar ist und zwar durch Verdrehen des Stellorgans, welches den Gelenkpunkt für die jeweilige Blattfeder vorgibt. Es muss also zur Einstellung des Drehmoments keine wesentliche Stellkraft überwunden werden, was sich für einen Benutzer als aufwändig und unangenehm oder zumindest unkomfortabel erweist.

Dabei kann vorgesehen sein, wenn das Stellorgan oder der Stellring radial nach innen weisende Stellmittel aufweist, mit denen das Stellorgan oder der Stellring auf die jeweilige Blattfeder drückt.

Es erweist sich des weiteren als vorteilhaft, wenn das Stellorgan in Umfangsrichtung um 50° bis 85°, insbesondere um 60° bis 75° verdrehbar ist. Das Stellorgan kann des weiteren in vorteilhafter Weise über inkrementelle Rastpositionen verstellbar sein. Zwischen diesen Rastpositionen ist dann ein in vorteilhafter Weise durch eine geringfügige Kraft überwindbares Hemmnis vorgesehen. Diese Ausführungsform wird vor einer Ausführungsform der Vorzug gegeben, wo durch Betätigen eines Entriegelungsorgans ein insbesondere formschlüssiger Hintergriff des Stellorgans in einer jeweiligen Rastposition beseitigt werden muss.

Das Stellorgan, insbesondere der Stellring, weist in vorteilhafter Weise ein radial nach außen erstrecktes und manuell ergreifbares Betätigungsmittel, bzw. einen entsprechenden. Betätigungsabschnitt auf. Dieser Betätigungsabschnitt kann ein radial vorstehender und sich insbesondere darüber hinaus in axialer Richtung erstreckender Griffabschnitt sein.

Das erfindungsgemäße Werkzeuggerät kann dabei so ausgestaltet sein, dass das Hohlrad auf seinem äußeren Umfang Rastnasen aufweist, so dass im Bereich zwischen zwei Rastnasen auf dem äußeren Umfang des Hohlrades die Rastkörper zu liegen kommen, wodurch ein gewisser Verdrehweg in Umfangsrichtung möglich ist, zwischen zwei Rastnasen auf dem Hohlrad und dem Rastkörper. Die Rastnasen sind so orientiert, dass sie vorzugsweise zwei unterschiedlich steile Flanken aufweisen, so dass sie beim üblichen Rechtsantrieb der Antriebswelle gegen den Rastkörper mit ihrer steileren Flanke drücken.

Zusätzlich kann vorgesehen sein, dass die Rastkörper in Vertiefungen des Hohlrads zu liegen kommen können, die zusätzlich zu den Rastnasen auf dem Außenumfang des Hohlrads vorgesehen sein können.

Als besonders vorteilhaft erweist es sich, wenn die Rastkörper zylindrisch ausgebildet sind, da in diesem Fall, im Gegensatz zur Verwendung von Rastkugeln, eine linienförmige Lastübertragung anstelle einer Punktlastübertragung erzielt werden kann, wodurch die Verschleißbeanspruchung reduziert ist.

Des weiteren kann vorgesehen sein, dass die Stellmittel des Stellrings so verdrehbar sind, dass die Stellmittel unmittelbar über den Rastkörpern zu liegen kommen. In diesem Fall ist die Drehmomentbegrenzung quasi deaktiviert, da die Rastkörper in diesem Fall nicht mehr aus der Kopplungsstellung freikommen können. Es erfolgt dann in jedem Fall ein Durchtrieb ohne dass die Kupplung auslöst.

Schließlich kann nach einer besonders bevorzugten Ausführungsform vorgesehen sein, dass auf dem Hohlrad ein oder mehrere Magnete vorgesehen sind, die mit einem gehäusefesten Sensor, insbesondere einem Hallsensor, zusammenwirken, wobei in der mindestens einen Feder und/oder der Anlaufscheibe mindestens ein Fenster vorgesehen ist, so dass bei rotierendem Hohlrad die Magneten an dem mindestens einen Fenster vorbeigehen. Erkennt der Sensor über die hiermit verbundene Elektronik, dass das Hohlrad zu drehen anfängt, so schaltet die Elektronik den Motor ab, um die Kupplungsteile der Rasten- und Rutschkupplung vor Verschleiß zu bewahren.

Weitere Merkmale, Einzelheiten und Vorteile der Erfindung ergeben sich aus den beigefügten Patentansprüchen und der zeichnerischen Darstellung und nachfolgenden Beschreibung von bevorzugten Ausführungsformen der Erfindung.

In der Zeichnung zeigt:
- Figur 1: eine Schnittansicht eines Getriebebereichs eines erfindungsgemäßen Elektrohandwerkzeuggeräts mit senkrecht zur Werkzeugspindel verlaufenden Schnittebene;
- Figur 2: eine Explosionsdarstellung eines Getriebebereichs;
- Figur 3: eine alternative Gestaltung des Getriebebereichs;
- Figur 4: eine Schnittdarstellung des alternativen Getriebebereichs gemäß Figur 3 in einem Längsschnitt mit vertikaler Schnittebene.

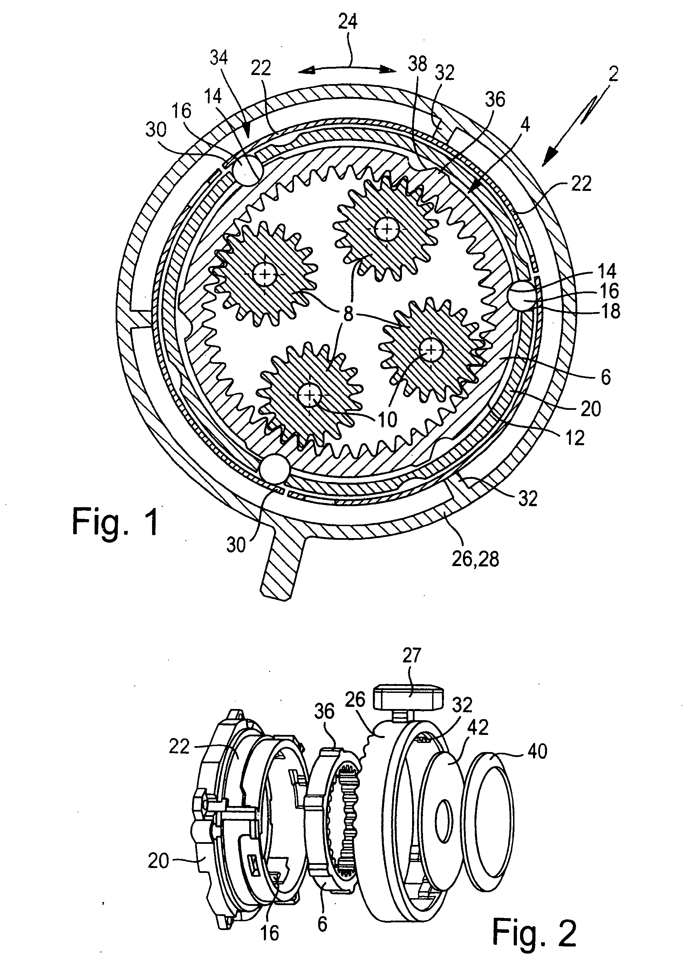

Figur 1 zeigt in schematischer Andeutung einen Getriebebereich eines elektromotorisch angetriebenen Schraubwerkzeuggeräts oder Bohrschraubers. Der Getriebebereich umfasst ein Planetengetriebe 4 mit einem Hohlrad 6 und mit damit kämmenden Planetenrädern 8, die vorzugsweise über ein gemeinsames nicht dargestelltes Ritzel (Sonnenrad) des elektromotorischen Antriebs rotierend antreibbar sind. Die Achsen 10 der Planetenräder 8 sind beispielsweise über einen Planetenträger mit einer ein Werkzeug oder ein Werkzeugfutter antreibenden Werkzeugspindel (nicht dargestellt) antriebsverbunden. Wenn also die Getrieberäder 8 gegen die Innenverzahnung des Hohlrads 6 abrollen, bewegen sich die Achsen 10 auf einer Kreislinie und treiben so den Planetenträger und damit die Werkzeugspindel an. Dies ist grundsätzlich bekannt und daher nicht näher dargestellt. Während dieses Antriebs ist das Hohlrad 6 gehäusefest arretiert. Hierfür weist das Hohlrad 6 an seinem Außenumfang 12 Vertiefungen 14 auf, in welche vorzugsweise zylinderförmige Rastkörper 16 eingreifen. Die Rastkörper 16 durchragen des Weiteren radiale Durchtrittsöffnungen 18 in einem gehäusefesten Rastring 20, der das Hohlrad 6 konzentrisch radial außen umgibt. In der in Figur 1 dargestellten gehäusefesten Fixierung des Hohlrads 6 ist das Hohlrad 6 über die mehreren, vorzugsweise drei Rastkörper 16 an den gehäusefesten Rastring 20 gekoppelt. Die Rastkörper 16 sind mittels Blattfedern 22 nach radial innen vorgespannt. Diese Blattfedern 22 sind in Umfangsrichtung 24, also konzentrisch zu dem gehäusefesten Rastring 20 und zu dem Hohlrad 6 erstreckt. Sie sind durch geeignete in der Zeichnung nicht dargestellte Mittel in Umfangsrichtung 24, aber auch in radialer Richtung verliersicher zwischen dem gehäusefesten Rastring 20 und einem radial außerhalb der Blattfedern wiederum konzentrisch angeordneten Stellorgan 26, im dargestellten Fall in Form eines zylindrischen Stellrings 28 angeordnet. Jede der drei Blattfedern 22 liegt mit einem Ende 30 von radial außen gegen einen Rastkörper 16 an und drückt diesen nach radial innen. Das erwähnte Stellorgan 26 drückt dabei mit einem nach radial innen vorstehenden Stellmittel oder Vorsprung 32 gegen die jeweilige Blattfeder 22 und fixiert somit den Gelenkpunkt, so dass sich ein wirksamer Federarm zwischen diesem Gelenkpunkt und dem freien Ende 30 der jeweiligen Blattfeder 22 ergibt. Die Hebelarmlänge lässt sich durch Verstellen des Stellorgans 26 in Umfangsrichtung 24 variieren. Je näher das Stellorgan 26 bzw. dessen Stellmittel 32 in Richtung auf das freie Ende 30 einer jeweiligen Blattfeder 22 verstellt wird, desto kürzer ist die wirksame Hebelarmlänge der Blattfedern 22 und desto höher ist die nach radial innen gerichtete Kraft auf den jeweiligen Rastkörper 16. Die vorstehenden Komponenten bilden somit eine Drehmomenteinstell- oder - begrenzungseinrichtung 34. Wenn das jeweilige Stellmittel 32 radial außerhalb des jeweiligen Rastkörpers 16 zu liegen kommt, so ist die Drehmomentbegrenzung quasi deaktiviert, da die Rastkörper 16 solchenfalls nicht aus der Kopplungsstellung freikommen können. Es erfolgt dann ein starrer Durchtrieb.

Vorteilhafter Weise ist die Drehmomenteinstelleinrichtung 34 derart konzipiert, dass die Drehmomentbegrenzung kontinuierlich oder in Stufen von beispielsweise 0,5 Nm als geringster Drehmomentbegrenzung bis 8 Nm als größter Drehmomentbegrenzung variiert werden kann. In vorteilhafter Weise kann auch ein Bohrbetrieb mit einer Überlastsicherung von wenigstens 40 Nm realisiert werden.

Eine jeweilige Vertiefung 14 ist zu einer Seite hin begrenzt von einer Erhöhung 36, die radial geringfügig über den sonstigen Außenumfang des Hohlrads 6 übersteht. Auf diese Weise wird diejenige Flanke 38, welche gegen den betreffenden Rastkörper 16 anliegt, vergrößert, so dass eine gleichmäßige Krafteinleitung in den Rastkörper bei geringerer Oberflächenbeanspruchung und geringerem Verschleiß möglich ist.

Beim Betrieb des erfindungsgemäßen Schraub- und/oder Bohrwerkzeuggeräts erfolgt, wie bereits erwähnt, ein gleichsinniger Antrieb der Planetenräder 8 über ein nicht dargestelltes Ritzel des Elektromotors. Die Planetenräder 8 rollen dabei über die Innenverzahnung des Hohlrads 6 ab, wobei das Hohlrad 6 durch die Rastkörper 16 gehäusefest an dem gehäusefesten Rastring 20 unverdrehbar gestellt ist. Somit wird die Umdrehung der Achsen 10 der Planetenräder über einen nicht dargestellten Planetenträger auf eine Werkzeugspindel für ein Werkzeug oder ein Werkzeugfutter übertragen. Hierbei liegt das Hohlrad bzw. dessen die jeweiligen Vertiefungen 14 für die Rastkörper 16 begrenzenden Flanken belastend gegen den jeweiligen Rastkörper 16 an und es resultiert eine den jeweiligen Rastkörper 16 nach radial außen drängende Kraft. Solange diese Kraft geringer ist als die von den Blattfedern 22 auf die Rastkörper 16 nach radial innen ausgeübte Kraft, bleibt das Hohlrad 6 gegenüber dem gehäusefesten Rastring 20 unverdrehbar. Wird die durch die Blattfedern 22 ausgeübte Gegenkraft jedoch überschritten, so wird der Rastkörper 16 aus der Vertiefung 14 nach radial außen gedrückt und das Hohlrad 6 wird gegenüber dem gehäusefesten Rastring 20 verdreht, bis es in die nächstfolgende Vertiefung 14 unter dem Druck der Blattfeder 22 eingreift oder auch diese Vertiefung überspringt. Auf diese Weise wird eine Drehmomentbegrenzung, also eine Begrenzung des über das Werkzeug auf das Werkstück ausgeübten Drehmoments erreicht. Der Grenzdrehmoment, bei dem die Kupplung auslöst, ist dabei im vorgegebenen Bereich voreinstellbar.

Figur 2 zeigt eine Explosionsdarstellung eines Getriebebereichs. Gleiche Bauteile sind hierbei mit gleichen Bezugszeichen wie in Figur 1 bezeichnet. Dabei ist das Hohlrad 6 hier hinsichtlich seines äußeren Umfangs anders ausgebildet und weist keine Vertiefungen zur Aufnahme der Rastkörper 16 auf. Vielmehr sind lediglich Rastnasen, die den Erhöhungen 36 entsprechen, vorgesehen, wobei die Rastkörper 16 im Bereich des Außenumfangs des Hohlrads 6 zwischen den Rastnasen 36 geführt sind.

Die Blattfedern 22 sind in ihrer montierten Position gezeigt.

Das Stellorgan 26 weist an seinem äußeren Umfang einen radial nach außen weisenden Anfassabschnitt 27 auf, der durch einen Bediener ergriffen werden kann und der in einem Winkelbereich von 50 - 85° gegenüber dem Gehäuse verdrehbar ist und so eine Einstellung der verschiedenen Drehmomentbegrenzungsstufen, also der Grenzdrehmomente, ermöglicht.

Zusätzlich zu dem bereits Gezeigten, ist in Figur 2 eine axiale Vorspannung des Planetengetriebes 4 über eine Feder 40 sowie eine Anlaufscheibe 42 vorgesehen. Die Feder 40 wird axial so festgelegt, dass sie eine axiale Vorspannkraft auf das Hohlrad 6 ausübt, wobei zwischen Feder 40 und Hohlrad 6 die Anlaufscheibe 42 angeordnet ist, um den Verschleiß der Feder 40 bei Durchrutschen des Hohlrads 6 zu reduzieren.

Durch die axiale Vorspannung des Planetengetriebes 4 wird neben dem Effekt, dass die Laufruhe des Planetengetriebes verbessert wird und die Geräuschentwicklung verringert werden kann, als weiterer Effekt erzielt, dass eine gewisse Abbremsung durch die Vorspannung auf das Hohlrad 6 erfolgt, so dass beim Anlaufen und Hochbeschleunigen der Maschine die Bewegung des Hohlrads 6 zunächst abgebremst wird und das Hohlrad 6 nicht mit den Planeten 8 mitbeschleunigt wird. Sofern das Hohlrad 6 mit den Planeten 8 mitbeschleunigt wird, kann es dazu kommen, insbesondere wenn die Rastnasen 36 nicht gegen die Rastkörper 16 anliegen, dass es aufgrund der Relativbewegung des Hohlrads 6 zum Rastring 20 zu einem solchen Drehmoment des Hohlrads 6 kommt, dass dieses mit seinen Rastnasen 36 beim Hochbeschleunigen die Rastkörper 16 überrastet, bis dann in einem konstanten Zustand das Drehmoment so weit konstant ist, dass die Rastnasen 36 gegen die Rastkörper 16 zur Anlage kommen und das Hohlrad 6 zum Stillstand kommt und gehäusefest festgelegt ist. Dieser Effekt des dynamischen Durchrastens kann durch die axiale Vorspannung über die Feder 40 und die Anlaufscheibe 42, die zu einer Abbremsung des Hohlrads 6 beim Hochbeschleunigen führen, verhindert werden.

Im Auslösefall der Rastenkupplung, nämlich sofern das Hohlrad 6 mit einem solchen Drehmoment beaufschlagt ist, dass die entstehende Kraft größer als die Federkraft der Blattfedern 22 ist, erfolgt eine relative Rotation des Hohlrads 6 gegenüber dem Gehäuse und in diesem Fall auch gegenüber der Anlaufscheibe 42 und der Feder 40. Es ist damit zusätzlich zur Rastenkupplung eine Rutschkupplung zwischen dem Hohlrad 6 und dem Gehäuse vorgesehen.

Durch die Vorsehung dieser Rutschkupplung wird die Rastenkupplung in ihrer Einstellbarkeit verbessert und in ihrer Funktionsweise verstärkt.

Die Feder 40 ist dabei hier als einfache Tellerfeder ausgebildet, die mit ihrem äußeren Umfang auf das Getriebe und das Hohlrad 6 zugeneigt ist. Alternativ können auch mehrere Tellerfedern 40 zu einem Tellerfederpaket zusammengefasst werden. Die Tellerfeder 40 ist im Ausführungsbeispiel als geschlossene Tellerfeder ausgebildet. Sie stützt sich mit ihrer dem Hohlrad 6 abgewandten Seite gegen das Gehäuse ab.

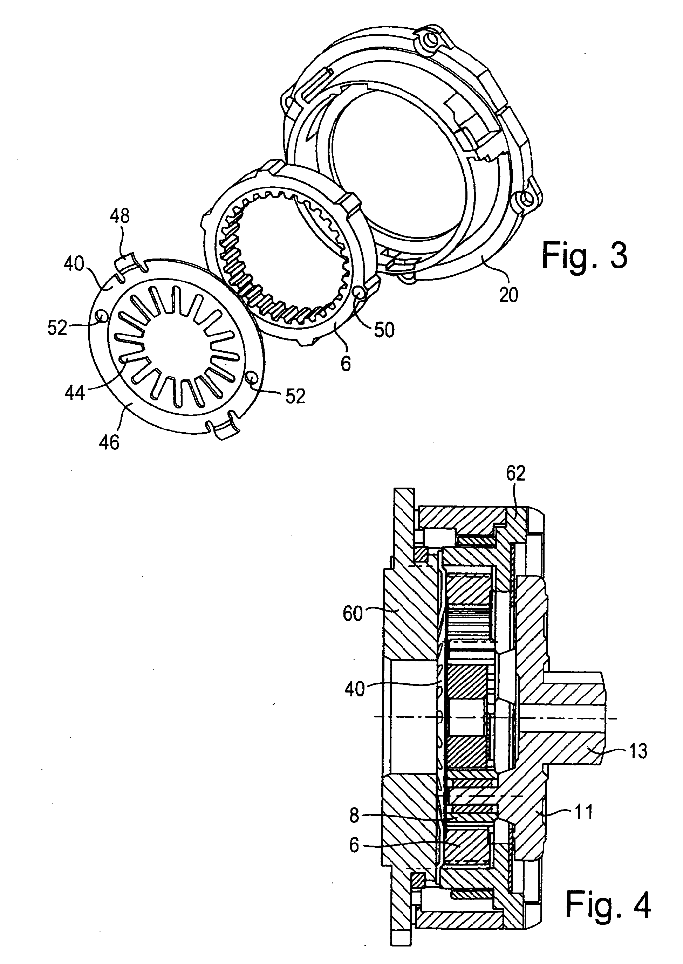

Figur 3 zeigt nun eine alternative Gestaltung einer Getriebeeinheit. Dabei ist der Rastring 20 identisch zum Rastring in Figur 2 ausgebildet. Ebenfalls stimmt die Geometrie des Hohlrads 6 mit der Geometrie des Hohlrads 6 gemäß Figur 2 überein. Im Gegensatz zur Ausführung gemäß Figur 2 wird jedoch eine geschlitzte Tellerfeder als Feder 40 eingesetzt, die ausgehend von ihrer inneren Öffnung radial nach außen weisende Schlitze 44 aufweist, die sich um den ganzen Umfang erstrecken. Darüber hinaus weist die Feder 40 gemäß Figur 3 einen geschlossenen ringförmigen äußeren Randbereich 46 auf, der an zwei gegenüberliegenden Seiten mit Haltelaschen 48 ausgestattet ist, die eine drehfeste Festlegung der Feder 40 im Rastring 20 ermöglichen. Diese Feder 40 wirkt dabei zugleich auch als Anlaufscheibe 42, die deswegen entfallen kann.

Darüber hinaus weist das Hohlrad 6 bei der Ausgestaltung gemäß Figur 3 einen Magneten 50 auf, der mit einem Sensor, der nicht dargestellt ist, zusammenwirken. Hierzu sind in der Feder 40 zwei Fenster 52 vorgesehen, an denen bei einer Relativbewegung des Hohlrads 6 zur Feder 40 die Magneten 50 vorbeiwandern. Wandern die Magneten 50 am Fenster 52 vorbei, erkennt der gehäusefest angeordneter Sensor, dass das Hohlrad 6 zu drehen beginnt, das heißt, er detektiert den Zeitpunkt, bei dem die Drehmomentkupplung ausgelöst wird und das Hohlrad 6 nicht länger über die Rastkörper 16 gehäusefest arretiert werden kann. Dieses Durchrasten wird vom Sensor an eine Elektronik der Maschine gemeldet, welche nach Auswertung die Maschine bzw. den Motor abschaltet. Durch die Vorsehung dieser Sensorik, wobei als Sensor insbesondere ein Hallsensor eingesetzt werden kann, verfolgt den Zweck, den Verschleiß der Kupplungsteile, nämlich Hohlrad 6, Rastkörper 16 sowie Blattfedern 22 und Stellring 28, durch Abschalten nach sehr kurzer Zeit des Durchratschens zu minimieren.

Schließlich zeigt Figur 4 eine montierte Getriebeeinheit gemäß Figur 3 mit einem Hohlrad 6 sowie darin umlaufenden Planeten 8, wobei hier der Planetenträger 11 über den der Abtrieb auf eine Werkzeugspindel erfolgt, die mit dem Bezugszeichen 13 versehen ist, dargestellt ist. Die geschlitzte Tellerfeder 40 wird über einen Gehäusedeckel 60 in axialer Richtung belastet und so gegen das Hohlrad 6 vorgespannt. Des weiteren ist das Getriebegehäuse 62 gezeigt, das gemeinsam mit dem Gehäusedeckel 60 die Getriebebaugruppe aufnimmt.

## Patentansprüche

1. Elektromotorisch angetriebenes Schraub- oder Bohrwerkzeuggerät mit einem Planetengetriebe (4) mit einem Gehäuse (62)umfassend ein Hohlrad (6) sowie im Hohlrad (6) geführt und mit diesem kämmende Planetenräder (8), sowie ein die Planetenräder (8) antreibendes Sonnenrad, wobei eine Werkzeugspindel (13) zum Antrieb eines Werkzeugs über die Achsen (10) der Planetenräder (8) antreibbar ist, und einer Drehmomenteinstelleinrichtung (34) umfassend radial nach innen federvorgespannte Rastkörper (16), mit denen das Hohlrad (6) gehäusefest festlegbar ist, wobei die Rastkörper (16) bei Überschreiten eines einstellbaren Grenzdrehmoments nach radial außen verdrängbar sind, so dass das Hohlrad (6) gegenüber dem Gehäuse (62) drehbar ist und die Werkzeugspindel (13) nicht mehr angetrieben wird, wobei in Umfangsrichtung verlaufende Blattfedern (22) vorgesehen sind, deren Hebelarmlänge, zur Erzeugung der Einrückkräfte, die auf einen Rastkörper (16) wirken einstellbar ist, **dadurch gekennzeichnet, dass** das Hohlrad (6) in axialer Richtung direkt oder indirekt mit mindestens einer Feder (40) oder einem federnden Element zusammenwirkt, die oder das das Hohlrad (6) axial federnd vorspannt.

2. Schraub- oder Bohrwerkzeuggerät nach Anspruch 1, **dadurch gekennzeichnet, dass** die mindestens eine Feder oder das mindestens eine federnde Element (40) eine Tellerfeder ist.

3. Schraub- oder Bohrwerkzeuggerät nach Anspruch 2, **dadurch gekennzeichnet, dass** die Tellerfeder (40) eine geschlitzte oder geschlossene Tellerfeder oder eine Wellfeder ist.

4. Schraub- oder Bohrwerkzeuggerät nach einem der Ansprüche 1 bis 3, **dadurch gekennzeichnet, dass** mehrerer Federn oder federnde Elemente (40) in axialer Richtung nacheinander angeordnet sind und zusammenwirken.

5. Schraub- oder Bohrwerkzeuggerät nach einem der vorangehenden Ansprüche, **dadurch gekennzeichnet, dass** die mindestens eine Feder (40) oder das federnde Element auf ihrer dem Hohlrad (6) zugewandten Seite mit einer Anlaufscheibe (42) zusammenwirkt.

6. Schraub- oder Bohrwerkzeuggerät nach einem der vorangehenden Ansprüche, **dadurch gekennzeichnet, dass** in die Feder (40) oder das federnde Element, die oder das am nächsten zum Hohlrad (6) angeordnet ist, eine Anlaufscheibe (42) integriert ist.

7. Schraub- oder Bohrwerkzeuggerät nach einem der vorangehenden Ansprüche, **dadurch gekennzeichnet, dass** Blattfedern (22) zur radialen Vorspannung der Radkörper (16) radial außerhalb eines gehäusefesten Rastrings (20) angeordnet sind und zur Einstellung der Hebelarmlänge direkt gegen diesen andrückbar sind.

8. Schraub- oder Bohrwerkzeuggerät nach einem der vorangehenden Ansprüche, **dadurch gekennzeichnet, dass** radial außerhalb der Blattfedern (22) ein Stellorgan (26), insbesondere ein Stellring (28) vorgesehen ist, das gegenüber dem Gehäuse (62) drehbar ist.

9. Schraub- oder Bohrwerkzeuggerät nach einem der vorangehenden Ansprüche, **dadurch gekennzeichnet, dass** das Stellorgan (26) radial nach innen weisende Stellmittel (32) aufweist, mit denen es radial nach innen gegen die Blattfedern (22) drückt und so die Hebelarmlänge einstellt.

10. Schraub- oder Bohrwerkzeuggerät nach einem der vorangehenden Ansprüche, **dadurch gekennzeichnet, dass** das Stellorgan (26) in Umfangsrichtung um 50° bis 85° verdrehbar ist gegenüber dem Gehäuse (62).

11. Schraub- oder Bohrwerkzeuggerät nach einem der vorangehenden Ansprüche, **dadurch gekennzeichnet, dass** das Stellorgan (26) einen radial nach außen weisenden Betätigungsabschnitt (27) aufweist.

12. Schraub- oder Bohrwerkzeuggerät nach einem der vorangehenden Ansprüche, **dadurch gekennzeichnet, dass** das Hohlrad (6)auf seinem äußeren Umfang Rastnasen (36) aufweist, die im eingerückten Zustand der Rastkörper (16) gegen die Rastkörper (16) anliegen und im verdrängten Zustand diese überrasten, wobei die Rastnasen (36) insbesondere unterschiedlich steile Flanken aufweisen.

13. Schraub- oder Bohrwerkzeuggerät nach einem der vorangehenden Ansprüche, **dadurch gekennzeichnet, dass** die Feder (40) oder das federnde Element und/oder die Anlaufscheibe (42) in Umfangsrichtung drehfest festlegbar ist am einem gehäusefesten Bauteil.

14. Schraub- oder Bohrwerkzeuggerät nach einem der vorangehenden Ansprüche, **dadurch gekennzeichnet, dass** auf dem Hohlrad (6) ein oder mehrere Magneten (50) vorgesehen sind, die mit einem gehäusefesten Sensor, insbesondere einem Hallsensor, zusammenwirken und wobei in der mindestens einen Feder (40) oder dem federnden Element und/oder Anlaufscheibe (42) mindestens ein Fenster (52) vorgesehen ist, so dass bei rotierendem Hohlrad (6) die Magneten (50)an dem mindestens einen Fenster (52) vorbeigehen und der Hallsensor eine Abschaltung des Antriebs des Schraub- oder Bohrwerkzeuggeräts auslöst.
